# EUROPEAN PATENT SPECIFICATION

(11) **EP 1 047 170 B1**
(45) Date of publication and mention of the grant of the patent: **11.06.2003**
(21) Application number: 00850047.2
(22) Date of filing: 20.03.2000
(51) Int. Cl.: H02G 3/16

(54) **Connection box for electrical installations**
Anschlussdose für elektrische Installationen
Boîte de connexion pour des intallations électriques

(30) Priority: 21.04.1999 SE 9901409
(43) Date of publication of application: 25.10.2000
(73) Proprietor: Eljo AB, 269 81 Bastad (SE)
(72) Inventor: Nilsson, Lars, 262 41 Ängelholm (SE)
(74) Representative: Sjöberg, Mats Hakan

(56) References cited:
- DE-A- 19 508 150
- FR-A- 564 156

## Description

The invention concerns an electric connection box in which electric leads are connected.

Boxes of this type are used in electrical installations at points where the leads or cables are concentrated or branched off and at transitions between different types of cables. The cables are normally attached to the box through openings in the walls or the bottom. The box, which is manufactured in an electrically insulated material, has often a circular form, which is easy to manufacture, but also square formed boxes are common for aesthetical reasons.

In order to facilitate the connection of the leads it is common to arrange a terminal board within the box. The board may have the form of a long body of an electrically insulated material being provided with a number of connection points, where the electric leads are inserted and locked, for instance by screw joints.

In order to make the box more flexible, i e to make it possible to use the same box independently of where the leads are supposed to enter, the walls and the bottom of the box is provided with a number of opening impressions in order to minimize the need for additional cable mounting. One way to increase the flexibility is to make it possible to move the terminal board within the frame of the box and preferably to mount it at any of the walls in order to maximize the free space within the box.

In order to further facilitate the operation it is also known to arrange the terminal board at a distance from the bottom of the box. This makes it easier for the operator to connect the leads and in addition a larger space for the lead loops is obtained within the box. According to the technique used today, a longitudinal terminal board is used which is provided with an opening at each end for connection with a fastening column erected from the bottom of the box. The fastening columns are located on the diagonals as close to the corners of the box as possible. The symmetric orientation brings about the possibility that one and the same terminal board may be used along any of the walls of the box. An example on this solution is disclosed in DE-A-195 08 150.

One disadvantage with the known device is however, that the part of the terminal board that is available for connection of the leads is limited. From manufacturing reasons as well as from aesthetical, the holes which are used for locking a cover on the box by screws, are located in the corners. Because of that the fastening columns have to be located at a distance from the corners in order to still be on the diagonals. This means that they will intrude on the available space in the box and that the space available on the terminal board will be diminished.

The purpose of the invention is thus to obtain a possibility to connect a terminal board within a connection box which allows a location at a distance from the bottom of the box, allows the same terminal board to be mounted along any of the side walls of the box and additionally maximizes the space available for connection of the leads and space for cable loops. This is obtained by help of the device stated in the claims.

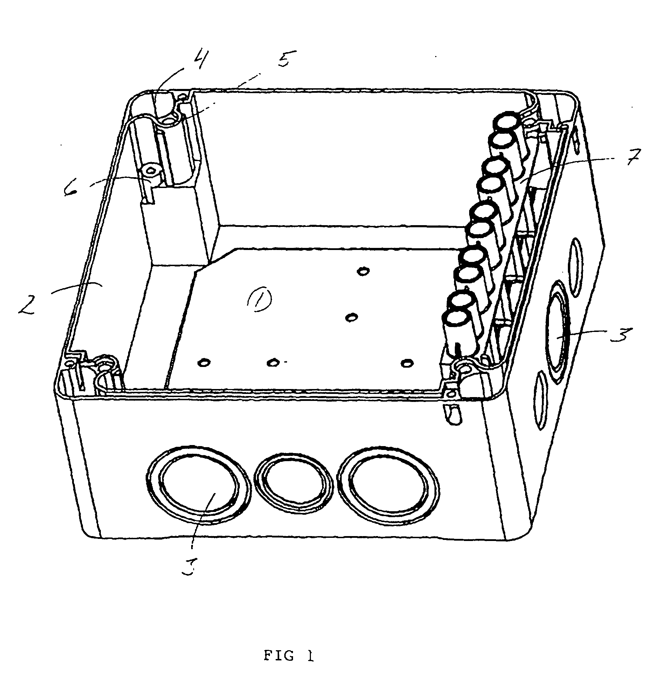

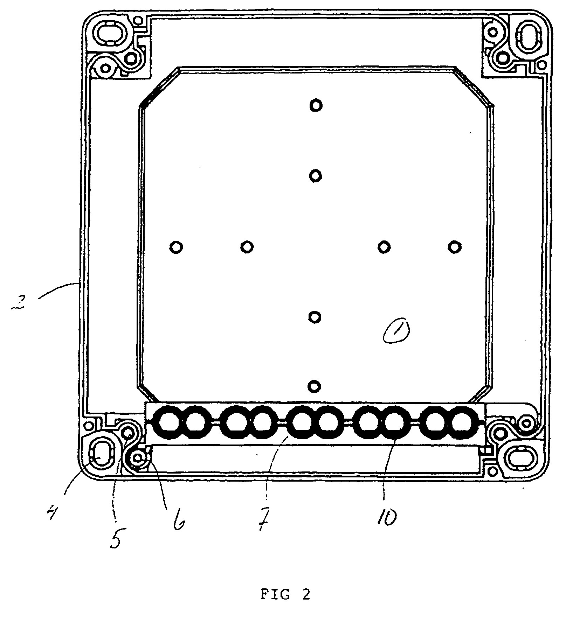

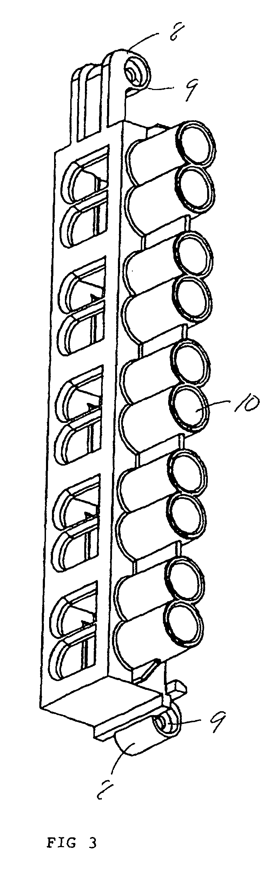

The invention is disclosed below with reference to the enclosed drawings. Fig 1 is a perspective view of a connection box without cover and with a mounted terminal board. Fig 2 shows the same connection box seen from above and Fig 3 a terminal board.
In the drawings 1 and 2 stand for the bottom and walls respectively of a connection box which are provided with opening impressions 3. 4 and 5 stand for attaching holes for the box and the cover respectively, and 6 fastening columns for a terminal board 7. 8 stands for the ends of the terminal board having attaching openings 9. 10 finally stands for connection points for electric leads.

A connection box according to the invention is provided with attaching holes 4 for locking the box to a wall or the like and attaching holes 5 for a cover. Said holes are located in the corners of the box, the latter holes diagonally inwards of the former as previously mentioned. The location of the holes 4 in the comers means that they may be placed outside of the sealed-off space where the electrical connections are made.

The four fastening columns 6 for the openings 9 in the ends of the terminal board 7 are, according to the invention, arranged close to the walls 2 a short distance from the corners where the attaching holes 4 are located. The fastening columns 6 are equally distributed around the periphery of the box, meaning that there is one fastening column adjacent each wall. Thanks to this symmetry, the terminal board 7 may be placed along any of the walls which is necessary to obtain the important flexibility. The arrangement of the fastening columns 6 close to the corners of the box according to the invention, also means that the distance between them is maximized which as a consequence means that the effective length of the terminal board is maximized too.

According to the invention is obtained a possibility to, when keeping the same effective length of the terminal board, diminish the outer measures of a connection box in a comparison with the known boxes. This brings about great advantages concerning costs and in addition a smaller box often harmonizes better to the surroundings.

## Claims

1. Electric connection box having a square cross section to be used for connection of electrical leads, which enter the box through the side walls (2) or the bottom (1), the connection taking place in a number of connection points (10) gathered in a longitudinal terminal board (7) which is easily mounted and dissembled at a distance from the bottom (1) and arranged to be possible to mount along any of the walls (2), said terminal board being provided with attaching means (9) at each end for cooperation with fastening columns (6) standing from said bottom, which columns (6) are equally distributed along and close to the walls (2) at a short distance from each corner of the box,
**characterized in, that** said attaching means (9) are designed asymmetrically in order to make possible mounting of the terminal board onto two adjacent fastening columns (6).

2. Electric connection box according to claim 1,
**characterized in, that** the number of fastening columns (6) are four.

3. Electric connection box according to claim 1,
**characterized in, that** the corners of the box are provided with holes (4) for attaching the box to a wall or the like.

## Patentansprüche

1. Elektrische Anschlussdose mit quadratischem Querschnitt zur Verwendung zum Anschließen von elektrischen Leitungen, die durch die Seitenwände (2) oder den Boden (1) in die Dose eintreten, wobei der Anschließvorgang an einer Reihe von Verbindungspunkten (10) stattfindet, die in einer länglichen Anschlussplatte (7) gesammelt sind, die in einem Abstand vom Boden (1) einfach montierbar und demontierbar ist und dazu ausgebildet ist, sich entlang einer beliebigen der Wände (2) montieren zu lassen, wobei die Anschlussplatte an jedem Ende mit einer Befestigungseinrichtung (9) zum Zusammenwirken mit vom Boden wegstehenden Befestigungszapfen (6) versehen ist, wobei die Befestigungszapfen (6) die Wände (2) entlang gleichmäßig verteilt sowie in der Nähe von diesen in einer kurzen Distanz von jeder Ecke der Dose angeordnet sind,
**dadurch gekennzeichnet, dass** die Befestigungseinrichtungen (9) asymmetrisch ausgebildet sind, um eine Montage der Anschlussplatte an zwei einander benachbarten Befestigungszapfen (6) zu ermöglichen.

2. Elektrische Anschlussdose nach Anspruch 1,
**dadurch gekennzeichnet, dass** die Anzahl der Befestigungszapfen (6) vier beträgt.

3. Elektrische Anschlussdose nach Anspruch 1,
**dadurch gekennzeichnet, dass** die Ecken der Dose mit Öffnungen (4) zum Anbringen der Dose an einer Wand oder dergleichen versehen sind.

## Revendications

1. Boîtier de connexion électrique ayant une section transversale carrée pour être utilisée pour la connexion de conducteurs électriques, qui entrent dans le boîtier au travers des parois latérales (2) ou du dessous (1), la connexion prenant place dans un nombre de points de connexion (10) réuni sur un connecteur longitudinal en forme de planche (7) qui est facilement monté et dissimulé à une distance à partir du dessous (1) et arrangé pour pouvoir être monté le long de n'importe laquelle des parois (2), ledit connecteur en forme de planche étant fourni avec des moyens de fixation (9) à chaque extrémité pour coopérer avec des colonnes de fixation (6) s'élevant à partir dudit fond, lesquelles colonnes (6) sont distribuées uniformément le long et près des parois (2) à une courte distance de chaque coin du boîtier, **caractérisé en ce que** lesdits moyens de fixation (9) sont définis de manière asymétrique afin de rendre possible le montage du connecteur en forme de planche sur deux colonnes de fixation adjacentes (6).

2. Boîtier de connexion électrique selon la revendication 1, **caractérisé en ce que** le nombre de colonnes de fixation (6) est de quatre.

3. Boîtier de connexion électrique selon la revendication 1, **caractérisé en ce que** les angles du boîtier sont fournis avec des trous (4) pour attacher le boîtier sur un mur ou équivalent.
